# EUROPEAN PATENT SPECIFICATION

(11) **EP 1 697 772 B1**
(45) Date of publication and mention of the grant of the patent: **15.04.2009**
(21) Application number: 04813301.1
(22) Date of filing: 08.12.2004
(51) Int. Cl.: G02B 5/124, G02B 5/136, G02B 5/13

(54) **METHOD AND APPARATUS FOR FORMING AN OPTICAL STRUCTURE**
METHODE UND APPARAT ZUR HERSTELLUNG EINER OPTISCHEN STRUKTUR
METHODE ET APPAREIL POUR LA FABRICATION D'UNE STRUCTURE OPTIQUE

(30) Priority: 09.12.2003 US 731416
(43) Date of publication of application: 06.09.2006
(73) Proprietor: Reflexite Corporation, Avon, CT 06001 (US)
(72) Inventor: NILSEN, Robert, B., Mystic, CT 06355 (US); ROWLAND, William, P., Plattsburgh, NY 12903 (US)
(74) Representative: Neobard, William John
(86) International application number: PCT/US2004/040968
(87) International publication number: WO 2005/057257

(56) References cited:
- WO-A-00/43813
- WO-A-03/098276
- US-A- 5 614 286
- US-A- 5 805 338

## Description

### RELATED APPLICATION

This application is a Continuation of U.S. Application No. 10/731,416, filed December 9, 2003, which is a Continuation-in-Part Application of U.S. Application No. 10/438,759, filed May 15, 2003, which claims the benefit of U.S. Provisional Application No. 60/380,990, filed May 15, 2002.

### BACKGROUND

Retroreflective materials are employed for various safety and decorative purposes. Particularly, these materials are useful at nighttime when visibility is important under low light conditions. With perfect retroreflective materials, light rays are reflected essentially towards a light source in a substantially parallel path along an axis of retroreflectivity.

Many types of retroreflective material exist for various purposes. These retroreflective materials can be used as reflective tapes and patches for clothing, such as vests and belts. Also, retroreflective materials can be used on posts, barrels, traffic cone collars, highway signs, warning reflectors, etc. Retroreflective material can be comprised of arrays of randomly oriented micron diameter spheres or close packed cube-comer (prismatic) arrays.

Cube-comer or prismatic retroreflectors are described in U.S. Patent 3,712,706, issued to Stamm on January 23, 1973.

Generally, the prisms are made by forming a master negative die on a flat surface of a metal plate or other suitable material. To form the cube-corners, three series of V-shaped grooves, each series of grooves being parallel and equidistant to the other grooves in the same series, are inscribed in the flat plate such that the grooves intersect at 60 degrees. The die is then used to process the desired cube-corner array into a rigid flat plastic surface.

Further details concerning the structures and operation of cube-comer microprisms can be found in U.S. Patent 3,684,348, issued to Rowland on August 15, 1972. A method for making retroreflective sheeting is also disclosed in U.S. Patent 3,689,346, issued to Rowland on September 5, 1972.

The disclosed method is for forming cube-comer microprisms in a cooperatively configured mold. The prisms are bonded to sheeting that is applied thereover to provide a composite structure in which the cube-comer formations project from one surface of the sheeting.

WO-A2-03/098276 discloses hollow optical structures containing optical microstructures.

### SUMMARY

Prior art manufacturing methods have suffered from the inability to produce wide sheets having a microstructured surface. Typically, sheets up to about 14 inches in width are pieced together to form a large area surface. However, the seam is usually very difficult to functionally hide and is almost always noticeable to the viewer. The tooling required to produce a wide sheet, which could be used, for example, in a rear projection television, is exceptionally expensive.

Novel optical structures having a microstructured surface have been discovered. In one embodiment, a method for manufacturing an optical structure according to claim 1 is provided that includes a substrate and a plurality of two-sided optical components disposed along the substrate. Each component includes optical microstructures on each side. At least a portion of one side of at least some of the components is air-backed and the other side of the at least some of the components is substantially wetted-out by a material.

The microstructures can include cube-comer prisms, diffractive structures and lenses, lens arrays, prism arrays, linear Fresnel lenses, lenslets, alphanumeric characters, digital structures (e.g., raised structures that are designed to carry information that is binary, for example, a bar code), colored structures, color shifting structures, textured structures, moth-eye structures, linear prisms and lenses, lenslets, fish-eye lens arrays, or other suitable microstructures. The resulting optical structure can be used in retroreflective product concepts, front projection screens that include air spheres, diffusion screens that include air spheres, louvre films that can be used for privacy, light control, collimation applications, and anti-glare films that use moth-eye or other optical microstructures.

In other embodiments, manufacturing methods according to claim 1 for forming retroreflective optical structures, threads, or fibers are set forth below.

### BRIEF DESCRIPTION OF THE DRAWINGS

The foregoing and other objects, features and advantages of the invention according to claims 1 and 9 will be apparent from the following more particular description of various embodiments of the invention according to claims 1 and 9, as illustrated in the accompanying drawings in which like reference characters refer to the same parts throughout the different views. The drawings are not necessarily to scale, emphasis instead being placed upon illustrating the principles of the invention according to claims 1 and 9.
FIG. 1 is a sectional view of one comparitive embodiment of a two-sided optical component.
FIG. 2 is a sectional view of another comparitive embodiment of a two-sided optical component.
FIG. 3 is a sectional view of a comparitive two-sided optical component having a color coating on the prism tips.
FIG. 4 is a sectional view of a comparitive two-sided optical component having color coatings between the substrate and prisms.
FIG. 5 is a sectional view of comparitive two-sided optical components spread across a substrate.
FIG. 6 illustrates one comparitive embodiment of partially embedding the components of FIG. 5 into the underlying substrate.
FIG. 7 illustrates a backing layer applied onto the exposed prism side of the partially embedded components of FIG. 6.
FIG. 8 is a sectional view of the optical structure formed in FIGS. 5-7.
FIG. 9 illustrates one comparitive embodiment of bonding the backing layer to the retroreflective structure.
FIG. 10 illustrates comparitive two-sided optical components being dropped onto a substrate.
FIG. 11 illustrates the comparitive two-sided optical components partially embedded into the substrate.
FIG. 12 illustrates the embedded side of the components of FIG. 11 being substantially wetted-out.
FIG. 13 is a sectional view of comparitive two-sided optical components positioned within cells formed in a substrate.
FIG. 14 is a sectional view of the embodiment of FIG. 13 with a backing layer laminated to the substrate.
FIG. 15 is a sectional view of a plurality of comparitive two-sided optical components being supported on a substrate.
FIG. 16 illustrates a fill layer being disposed over the two-sided optical components of FIG. 15 to bond the components to the substrate.
FIG. 17 is a sectional view of the resulting optical structure formed in FIGS. 15 and 16 when the index of refraction of the fill layer and underlying substrate are substantially the same.
FIG. 18 is a sectional view of a comparitive two-sided optical component.
FIG. 19 is a top view of the component illustrated in FIG. 18.
FIG. 20 illustrates the optical component shown in FIGS. 18 and 19 pressed in a fabric.
FIG. 21 illustrates the fabric shown in FIG. 20 with a coating thereon.
FIG. 22 is an embodiment of a comparitive two-sided optical component embedded within a layer of fabric.
FIG. 23 illustrates one embodiment of embedding a comparitive two-sided optical component in a substrate.
FIG. 24 illustrates the components shown in FIG. 23 partially embedded to wet- out one side of the components.
FIG. 25 illustrates the resulting optical structure of FIGS. 23 and 24 when the index of refraction of the components and the substrate is substantially the same.
FIG. 26 illustrates comparitive two-sided optical components partially embedded in adhesive.
FIG. 27 illustrates the resulting optical structure of FIG. 26 when the index of refraction of the components and the adhesive is substantially the same.
FIG. 28 is a sectional view of comparitive two-sided optical components embedded within a substrate.
FIG. 29 is a sectional view illustrating comparitive two-sided optical components partially embedded within a substrate.
FIG. 30 illustrates comparitive non-planar two-sided optical components partially embedded within a substrate.
FIG. 31 is a schematic of a comparitive apparatus used to locate two-sided optical components on a substrate.
FIG. 32 is a top view of a comparitive honeycomb structure used to locate two-sided optical components on a substrate.
FIG. 33 is a sectional view of a comparitive honeycomb structure positioned on a substrate with two-sided optical components disposed within the honeycomb structure.
FIG. 34 is an enlarged view of two-sided optical components within the honeycomb structure of FIG. 33.
FIG. 35 is similar to FIG. 33 but having the excess two-sided optical components removed from the honeycomb structure.
FIG. 36 is a sectional view of the resulting optical structure formed from the embodiment shown in FIGS. 33-35.
FIG. 37 is a sectional view of another comparitive embodiment of an optical structure used to form two-sided optical components.
FIG. 38 illustrates a pattern used to seal the optical structure shown in FIG. 37.
FIG. 39 is a sectional view of another comparitive embodiment of a two-sided optical component.
FIG. 40 is similar to the embodiment shown in FIG. 39 but having a layer disposed in the middle.
FIG. 41 is similar to the embodiment of FIG. 40 but not having extending members registered on the middle layer with respect to one another.
FIG. 42 is a sectional view of a further embodiment of a two-sided optical component.
FIG. 43 is a sectional view of another comparitive embodiment of a two-sided optical component.
FIG. 44 is a sectional view of yet another comparitive embodiment of a two-sided optical component.
FIG. 45 is a sectional view of a plurality of comparitive two-sided optical components disposed on a substrate.
FIG. 46 is similar to FIG. 45 but having a fill layer disposed over the two-sided optical components.
FIG. 47 is a sectional view of the optical structure shown in FIG. 46 with the substrate removed and the two-sided optical components being metalized on one side.
FIG. 48 is similar to FIG. 47 but having the adhesive disposed over the metalized side of the two-sided optical component.
FIG. 49 is a perspective view of a comparitive retroreflective thread in accordance with an embodiment of the present invention.
FIG. 50 is a side view of a row of comparitive microstructures positioned on a substrate.
FIG. 51 is a perspective view of the substrate of FIG. 50 formed into a retroreflective thread enclosing the microstructures therein.
FIG. 52 is a side view of two rows of comparitive microstructures positioned on a substrate.
FIG. 53 is a perspective view of the substrate of FIG. 52 formed into a retroreflective optical structure enclosing the microstructures therein.
FIG. 54 is a side view of three rows of comparitive microstructures positioned on a substrate.
FIG. 55 is a perspective view of the substrate of FIG. 54 formed into a retroreflective thread enclosing the microstructures therein.
FIG. 56 is a side view of a comparitive retroreflective thread having ends thereof sealed in accordance with an comparitive embodiment of the invention.
FIG. 57 is a side view of comparitive microstructures formed on a substrate with at least some of the microstructures including air spheres.
FIG. 58 illustrates a comparitive manufacturing method of wrapping a substrate around microstructures positioned thereon to form retroreflective threads.
FIG. 59 is similar to FIG. 58 but wherein heat is used to join walls of the substrate together at a seam to form the retroreflective threads.
FIG. 60 is a schematic of a system used to form retroreflective threads in accordance with another comparitive embodiment of the invention.
FIG. 61 is a side view of a comparitive substrate having microstructures therein in which material that forms the microstructures extends through the substrate.
FIG. 62 is a cross-sectional view of a retroreflective thread formed from the structure of FIG. 61.
FIG. 63 is a side view of the retroreflective thread of FIG. 62.
FIG. 64 is a schematic of a mold used to form optical structures in accordance with embodiments of the invention.
FIG. 65 is a cross-sectional view of an optical structure in accordance with an embodiment of the invention.
FIG. 66 is a cross-sectional view of an optical structure in accordance with another embodiment of the invention.
FIG. 67 is a cross-sectional view of an optical structure in accordance with a further embodiment of the invention.
FIG. 68 is a cross-sectional view of an optical structure in accordance with yet another embodiment of the invention

### DETAILED DESCRIPTION

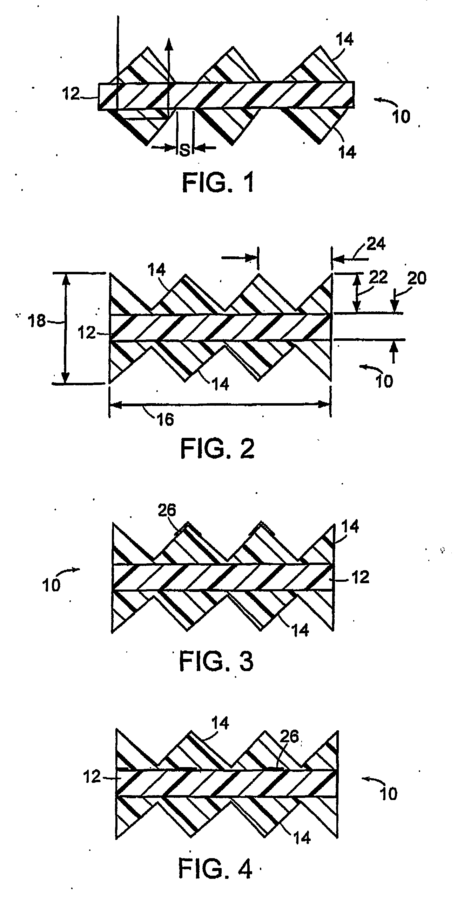

A description of various embodiments outside the scope of the present invention follows. FIG. 1 is a sectional view of One comparitive embodiment of a two-sided component, chip, or flake, and referred to herein as a component, and is designated generally as reference numeral 10. A substrate 12, which can be substantially transparent or optically clear, supports a plurality of elements 14, such as retroreflective cube-comer prisms. In alternative comparitive embodiments, A each component 10 is two-sided, with each side having optical microstructures. The microstructures can include, for example, moth-eye structures, cube-comer prisms, linear prisms, lenslets, fish-eye lens arrays, and/or other suitable optical structures.

As will be explained below with reference to certain embodiments, the component 10 is wetted-out on one side and air-backed on the other side such that light passes through the wetted-out cube-comer prisms 14 on one side of the substrate 12 and is retroreflected by the air-backed prisms 14 on the other side of the substrate. In one comparitive embodiment, the cube-comer prisms 14 are formed from a substantially transparent or optically clear material. The cube-comer prisms 14 can be spaced apart (S) along the substrate 12 such that the three-sided base that extends to an apex of one prism does not touch the base of an adjacent prism. In other comparitive embodiments, the elements 14 include a moth-eye structure, such as disclosed in U.S. Patent 4,013,465, issued to Clapham et al. on March 22, 1977.

FIG. 2 is a sectional view of another comparitive embodiment of a two-sided component 10 in which the cube-comer prisms 14 are contiguous and not spaced apart. In this comparitive embodiment, the component 10 has a length 16 of between about 0.076 and 0.457 mm (0.003 and 0.018 inches). Retroreflective sheeting having prisms 14 formed on either side can be cut, such as mechanically or with a laser, or formed into components 10 having these or other dimensions. The thickness 18 from apex to opposing apex can have a range of between about 0.0381 and 0.193 mm (0.0015 and 0.0076 inches). The thickness 20 of the substrate 12 can have a range of between about 0.0127 and 0.051 mm (0.0005 and 0.002 inches). The distance 22 from the substrate 12 to the apex of a prism 14 can have a range of between about 0.0127 and 0.071 mm (0.0005 and 0.0028 inches). The distance 24 from apex to adjacent apex can have a range of between about 0.025 and 0.152 mm (0.001 and 0.006 inches).

The length 16 to width 18 aspect ratio is such that the component 10 usually, when dropped on a surface, lands on one of the larger area sides.

That is, a component 10 dropped onto a flat surface often orients itself as shown in FIG. 2. *i.e.,* substantially horizontal, with the substrate 12 being parallel to the flat surface. Other comparitive methods of positioning the components 10 are described below.

In any of the comparitive embodiments disclosed herein, different size elements, prisms, or optical microstructures can be used to achieve unique retroreflected light distributions. For example, the length along the base edge of different prisms can vary in a single component 10 or between components. Also, the prisms 14 can be tilted or canted with respect to an optical axis as disclosed in U.S. Patent 5,171,624, issued on December 15,1992 to Walter, or tilted and oriented as discussed in U.S. Patent 3,684,348, issued to Rowland on August 15, 1972.

The prisms 14 can be tilted at different angles in the positive or negative direction on the same or different components 10 and be oriented in different directions to achieve unique retroreflected light distributions.

As shown in FIGS. 3 and 4, color can be added to the component 10 to further provide unique retroreflected light distributions. In one comparitive embodiment as shown in FIG. 3, a color coating 26 can be added to some or all of the prism tips. In other comparitive embodiments, the color coating 26 can be formed over the entire facet. As shown in FIG. 4, the color coating 26 can be disposed between the substrate 12 and the prisms 14. Single or multiple color combinations can be used on the same or different components 10. In other comparitive embodiments, fluorescent color or colors can be used in the color coatings.

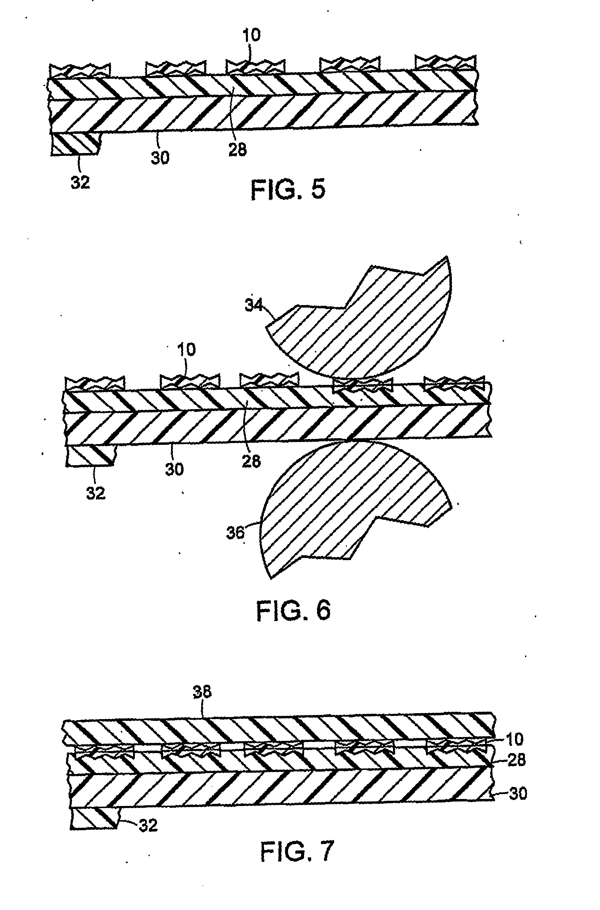

FIGS. 5-10 illustrate an embodiment outside the scope of the present invention in which components 10 are first spread across a substrate 28, such as a substantially transparent heat-activated or pressure-sensitive adhesive coating, that has been applied to a substantially transparent substrate 30 or top film. An optional carrier film 32 can be disposed along the top film 30. The spacing of the components 10 can be controlled to achieve the amount of coverage desired. In one comparitive embodiment, the components 10 can overlap to increase the tilt of the components.

FIG. 6 illustrates one comparitive embodiment of partially embedding the components 10 into the adhesive 28. In this comparitive embodiment, the structure is passed between laminating rolls 34, 36 to push the bottom side of the component 10 into the adhesive 28 to wet-out the prism facets 14 on the side that is embedded within the adhesive. Adhesive. 28 can be softened, for example, with radiant heat, prior to encountering the lamination rolls 34, 36. In a particular comparitive embodiment, roll 34 is a heated roll and roll 36 is a cold roll. It is contemplated that there are other ways of partially embedding the components 10 into the adhesive 28, such as by using compressed air. The adhesive 28 can have the same index of refraction as the material that forms the components 10 unless some additional light redirection is desired.

As shown in FIG. 7, a backing layer or film 38 can be applied onto the exposed prism side of the components 10. In one embodiment, the backing layer 38 is laid upon the exposed prisms at low pressure to prevent damaging the exposed prism tips. The backing layer 38, adhesive 28, top film 30, and/or carrier film 32 can include any color including fluorescent color to achieve a desired product appearance. In one comparitive embodiment, backing layer 38 can be formed from a soft white material. In other comparitive embodiments, the backing layer 38 is formed from a substantially transparent material for forming a transflector type product. Generally, these transflectors have light transmitted through the retroreflective structure from the back as in back-lit signs used at airports or for bollards.

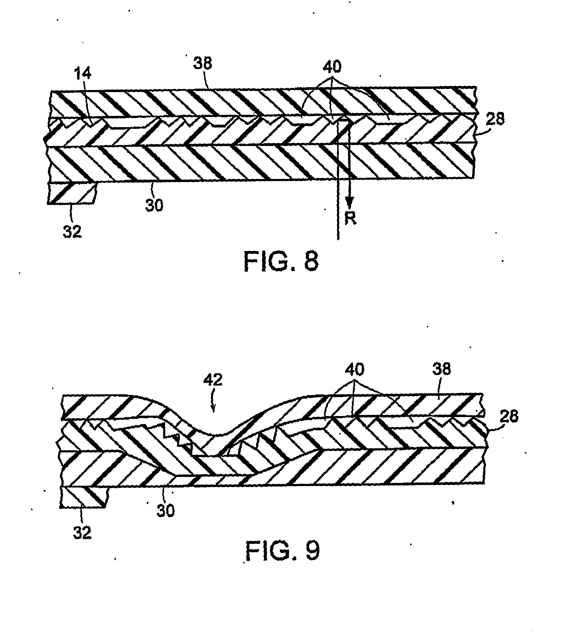

If the index of refraction is substantially the same between the prisms 14, adhesive 28, top film 30, and carrier film 32, no boundaries are present and there is no Fresnel reflection or scattering losses at these interfaces, as shown in FIG. 8. Air pockets are designated as reference numeral 40. This light ray R is retroreflected by the structure as the non-wetted side of the component 10 functions as the air-backed retroreflector.

FIG. 9 illustrates one comparitive embodiment of bonding the backing layer 38 to the retroreflective structure. In this comparitive embodiment, a sealing die with a cellular footprint and narrow lands is used to heat and push the backing layer 38 down to a point or area 42 where it bonds to the existing adhesive 28. In other comparitive embodiments, some of the backing layer 38 is pushed through the adhesive 28 and bonds to the top film 30. Radio frequency (RF) sealing, ultrasonic sealing, and hot lamination can also be used to bond the backing layer 38 to the structure. In any of the comparitive embodiments disclosed herein, the structures can be sealed or processed as disclosed in U.S. Patents 6,039,909 and 6, 143, 244.

Optionally, a pattern adhesive can be applied to the backing layer and laminated to the product construction.

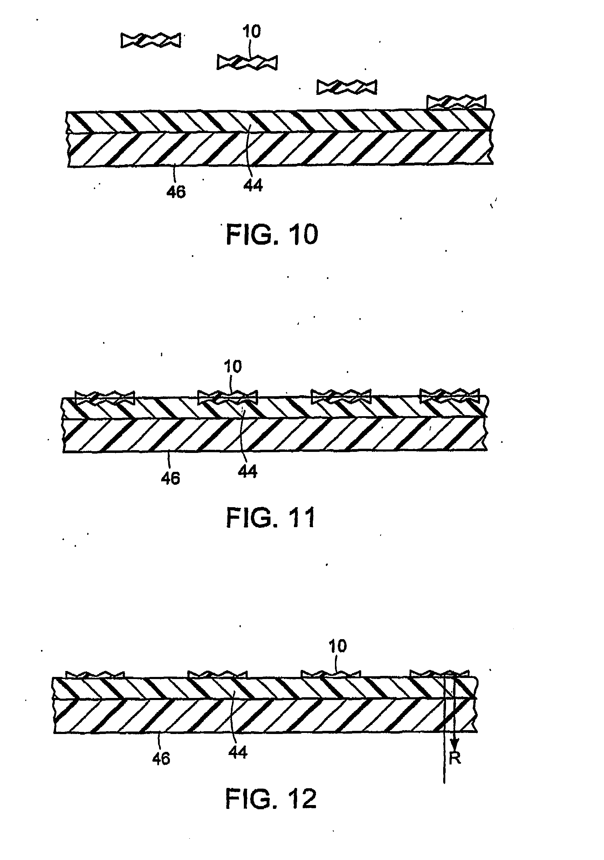

FIGS. 10-12 illustrate another embodiment outside the scope of the present invention in which components 10 are dropped onto a substrate 44, such as a liquid-curable coating or adhesive. The sides of the components 10 that contact the coating 44 are wetted-out as shown in FIG. 11. Some air pressure, mechanical, or other methods can be used as necessary to push the components 10 into the coating 44 if the coating surface tension prevents the prism peaks from penetrating the coating. A substantially transparent top film 46 can be provided on the coating 44 as shown. The coating 44 is then cured, for example, with heat or ultraviolet radiation to create a solid but flexible product.

If the index of refraction is substantially the same between the prism material and the coating 44, no boundaries are present and there is no Fresnel reflection or scattering losses at these interfaces as illustrated in FIG. 12.

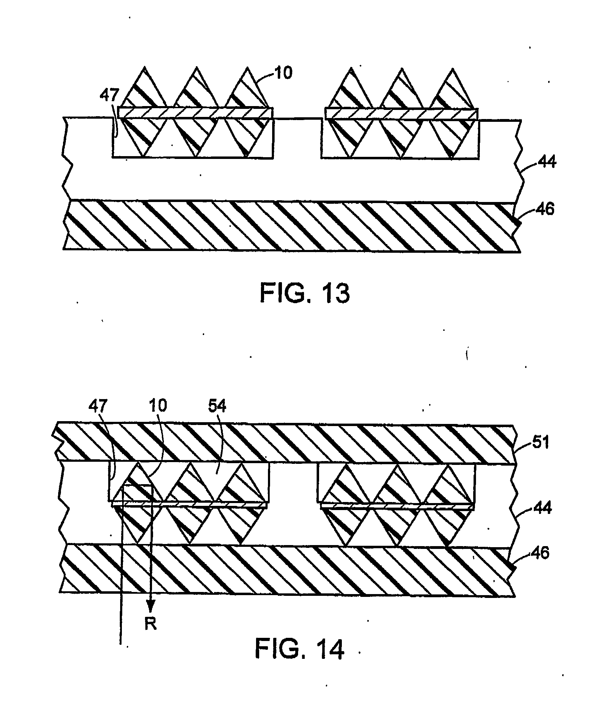

FIGS. 13 and 14 illustrate a comparitive embodiment of placing the components 10 on the substrate 44 in a desired location or pattern. Substrate 44, that can include a transparent heat-activated adhesive, is applied to the top film 46 in a pattern that creates cells 47 that have adhesive in the bottom. The components 10 fall into the cells 47 and a backing layer 51 can be laminated to push the components into the adhesive.

In further comparitive embodiments, the components 10 can be positioned on a substrate in a pattern using techniques as described in an article entitled "Self Assembly Required," by Ron Dagani, in Chemical & Engineering News, p. 13 (April 15, 2002).

In any of the comparitive embodiments disclosed herein, wide area sheets can be formed having at least one side having a plurality of microstructures. The sheets can be mechanically cut, laser cut, or formed into threads. In one comparitive embodiment, the threads are about 0.3048 micrometers (0.012 mils) wide. The threads can be chopped into lengths of about 2.54 micrometers (0.1 mils). The threads and components can be formed into any geometric shape such as square, rectangular, diamond-shape, etc.

In other comparitive embodiments, a security film original document can be manufactured that has at least one message or design such as a watermark printed in transparent ink. The transparent ink wets-out to show the message. A copy or duplicate of the document cannot be easily made unless one has access to the film and printing system.

Also, in any of the comparitive embodiments, the thickness of substrates 28, 44 can be optimized to be equal to the prism depth so that the components do not submerge in the substrate, thereby wetting-out only one side.

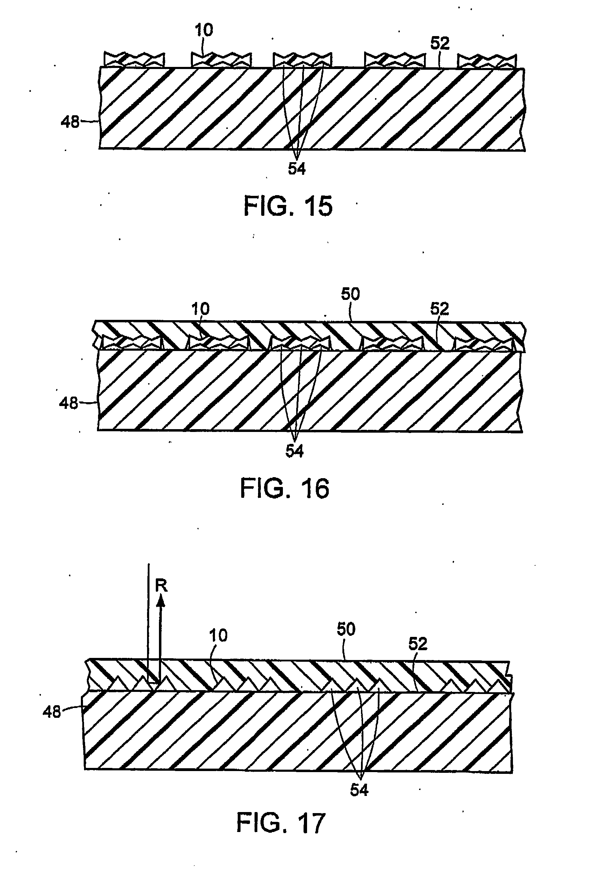

FIGS. 15-17 illustrate another embodiment outside the scope of the present invention. In a particular comparitive embodiment, a substrate or carrier 48 supports a plurality of components 10. The substrate 48 can include fabrics, clothing, and the like. To form the two-sided components 10, the bases of two cube-comer sheetings are attached, for example, to a transparent film or substrate 12. The facets from each sheeting thus extend away from the transparent film. In other comparitive embodiments, the bases can be directly attached to one another such that they are formed without substrate 12. The two-sided structure is then formed into components 10.

In one comparitive embodiment, the components 10 are positioned, for example, randomly, on the substrate 48 and lie substantially flat. A fill layer 50 covers the components 10 and bonds them to the substrate 48, for example, at area 52 between components. The fill layer 50 has a sufficiently high viscosity, such as about 30,000 to 50,000 centipoises, such that it does not flow underneath the components 10 to provide air pockets 54 under substantially all of the components 10. Thus, the components 10 are wetted-out on top by the fill layer 50 such that light incident on the top of each component 10 passes through. Some pressure can be used to ensure substantially uniform wetting. The air pockets 54 provide an "air backed" component 10 such that light passing through the top of the component 10 is retroreflected by the air-backed facets. The light retroreflected from the air-backed facets has a white appearance, which can be preferred in some applications.

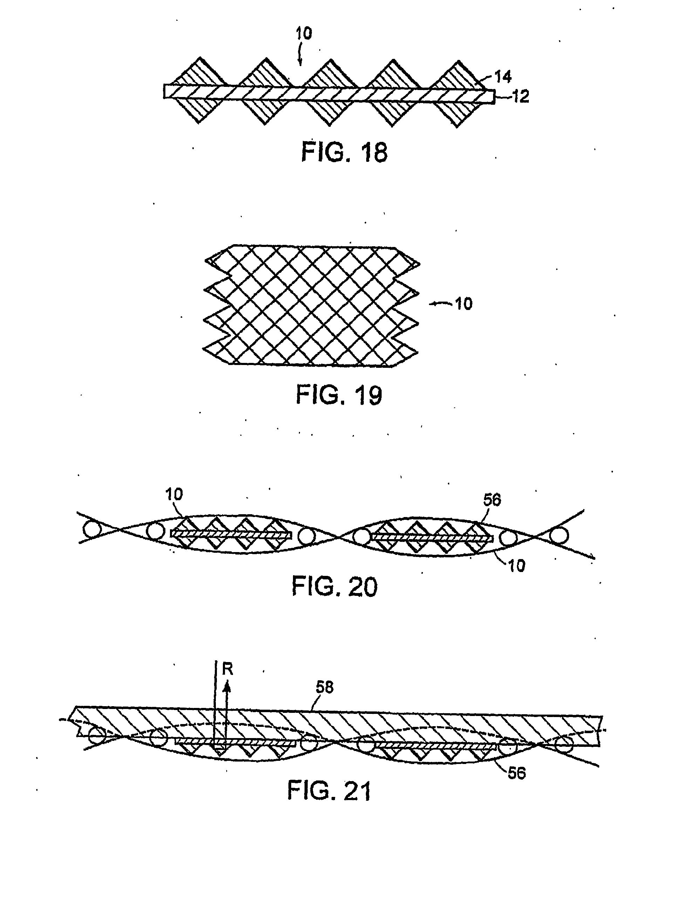

FIGS. 18 and 19 illustrate a comparitive component 10 that is made with barbs cut into the edges that can grab into woven and non-woven fabrics and papers.

FIG. 20 illustrates the comparitive components 10 pressed in a fabric 56 and held in place by the barbs. As illustrated in FIG. 21, a coating 58 can be provided on a side of the components 10 to produce a garment that retroreftects light ray R, as shown. This product configuration can now be bonded onto a substrate by fasteners, such as sewing or rivets or by adhesives or by heat, radio frequency, ultrasonic, or other suitable sealing means. Many types of substrates, which can range from fabrics to polymers to metal to ceramic, can be used depending on the application. The product configuration can be made into garments, such as raincoats, which may have an inner liner to protect the exposed prism tips.

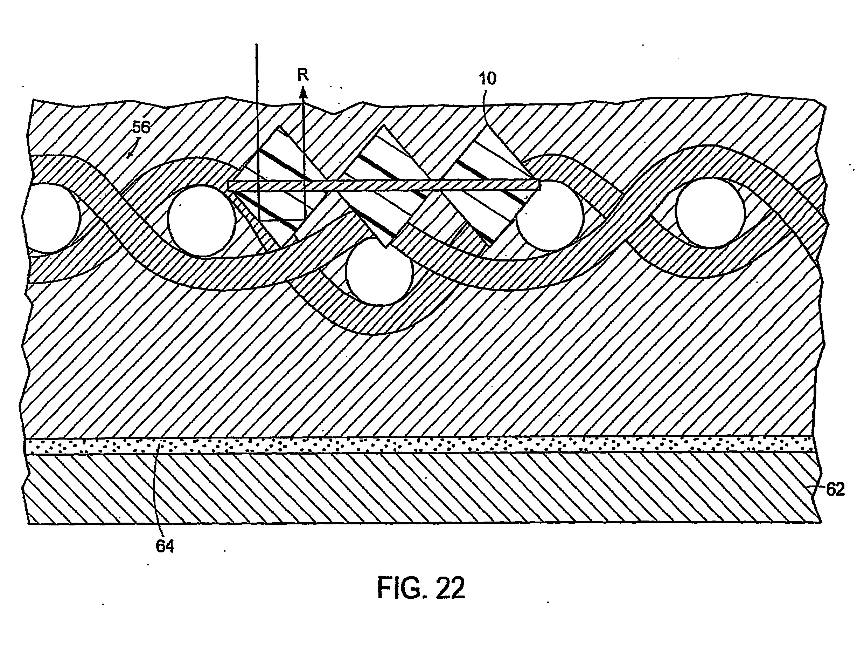

Two-sided, open-faced components or anti cube-comers, such as disclosed in U.S. Application 09/488,129, filed January 20, 2000, and International Publication WO 00/43813, published on July 27, 2000, can be used in high temperature applications. FIG. 22 illustrates a comparitive embodiment of a component 10 embedded within a layer of fabric 56, which can include fluorescent material. A substantially transparent top coat 58 is provided on the fabric 56. In any of the comparitive embodiments disclosed herein, an outer or top coat that can be provided on the optical structures or components includes pillory or other suitable material that is substantially transparent and hard as formed. Fabric 56 can be attached to a substrate 62, which can be opaque and/or fluorescent, with an adhesive 64. The use of opaque fluorescent fabrics, adhesive, and substrate material allows the production of a long lasting material, which can be used in outdoor applications. The random orientation of the components 10 can produce a glitter effect that is increased when the top prisms are not completely wetted-out.

In any of the comparitive embodiments disclosed herein, the components. 10 can be made from many different materials, such as luminescent, colored, diffractive, etc. Many different types of flakes can be mixed together to form many interesting appearances and functional effects.

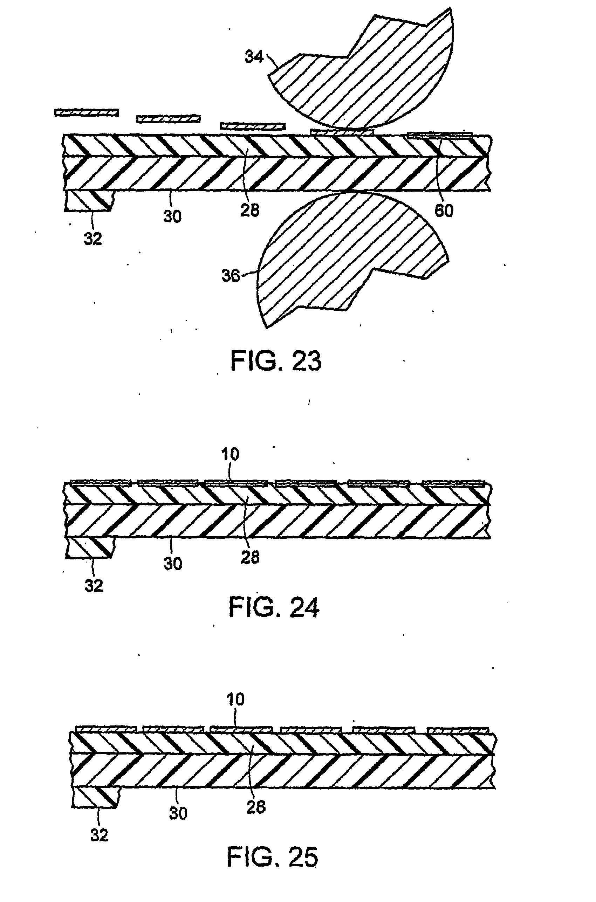

FIGS. 23-30 illustrate various comparitive embodiments in which the component 10 includes moth-eye structures, diffusers, or other optical microstructures on both sides.

The components 10 can be partially embedded into an adhesive 28 with rolls 34, 36. Partially embedded components 60 are thus provided in which one side is substantially wetted-out.

The resulting structure is shown in FIGS. 24 and 25. The adhesive 28 can have the same index of refraction as the material that forms the moth-eye or diffuser microstructures (resulting in the structure shown in FIG. 25) unless some additional light redirection is desired. In a particular comparitive embodiment, approximately ninety percent of the surface has moth-eye or diffuser optical microstructures. Thus, the surface becomes anti-reflective when moth-eye components are used and diffuse when diffuser components are used.

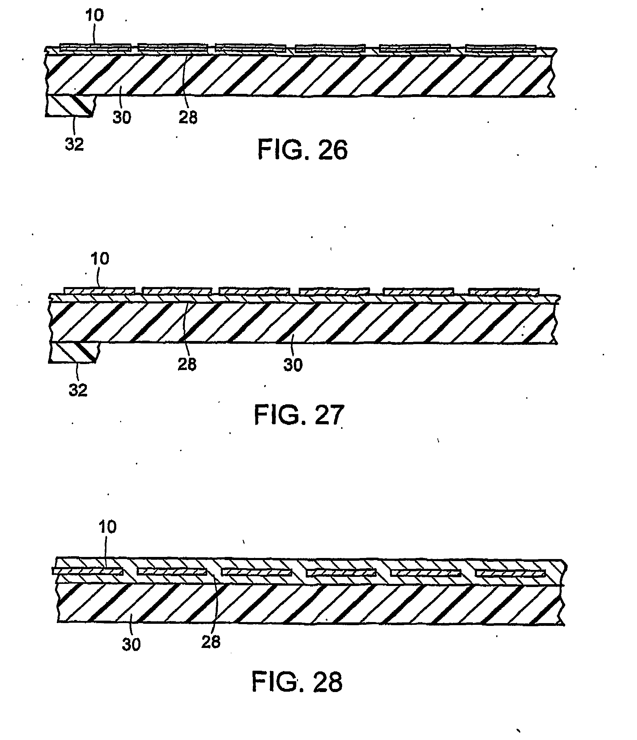

As shown in FIG. 26, the components 10 can be dropped onto a liquid coating or adhesive 28 and allowed to wet to the coating on the side of the component 10 that comes into contact with the coating. Air pressure or other methods can be used to push the component into the coating if the coating surface tension prevents the component from wetting-out on one side. Again, the thickness of coating 28 can be made to a depth such that the component cannot submerge deep enough to cover the non-wetted-out side. The wetted-out side of the components 10 contacts substrate 30 to prevent the components from being submerged in the coating 28. The coating 28 can have the same index of refraction as the material that forms the moth-eye or diffuser microstructures (resulting in the structure shown in FIG. 27) unless some additional light redirection is desired. In a particular embodiment, approximately ninety percent of the surface has moth-eye or diffuser optical microstructures.

In other comparitive embodiments, the components 10 can be dropped or mixed into a liquid coating 28 and the components are allowed to wet to the coating on both sides. The resulting structure is shown in FIG. 28. In the case of two-sided surface relief diffuser components that are made from a material that has an index of refraction significantly different than the coating or adhesive, the components can be submerged in the coating or adhesive 28. An index difference achieved by having a silicone-based adhesive with n=1.35 and a component with n=1.58 is an example of a product that works well as a bulk surface relief diffuser.

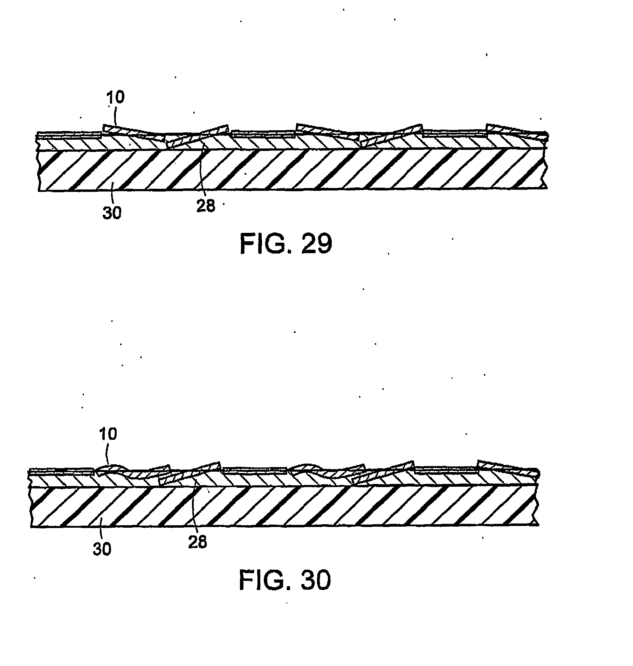

FIG. 29 illustrates components 10 wetted-out with coating 28 cured. As before, the coating 28 can be sufficiently thin so that the components 10 cannot submerge enough to wet-out both sides. With the longitudinal axis of the components 10 non-parallel to the surface of the coating 28, additional anti-glare or diffuser functions are provided. In other embodiments, the substrate surface 28 can be made non-flat to enhance the anti-glare or diffuser functions.

As shown in FIG. 30, the components 10 can be non-planar to provide additional anti-glare or diffuser functions.

In some applications, it may be desirable to register or locate the components 10 in a desired pattern on the substrate. The components 10 can have any geometric shape, including circular, hexagonal, triangular, and rectangular shapes. In one embodiment, the components are 0.1016 mm (0.004 inch) thick, 0.508 mm (0.020 inch) long, and 0.508 mm (0.020 inch) wide.

In a particular comparitive embodiment, a perforated film is used as the template. The film can be about 0.1016 mm (0.004 inch) thick and have holes slightly larger than the longest dimension of the component. Only one component at a time is able to fit into the perforated hole. An uncured, clear coating or an optical grade clear adhesive is disposed on a substantially clear substrate. The template is then placed on the coating or adhesive. The components 10 are then placed in the holes of the template, with one component in each hole. In one comparitive embodiment, the components are vibrated to facilitate the placement of one component in each hole. Pressure can be used to ensure the components are pressed into the adhesive. The extra components can be removed, for example, with a vacuum, for re-use. If necessary, the components can be pressed farther into the adhesive. The perforated template is then removed and the coating or adhesive can be cured, if necessary.

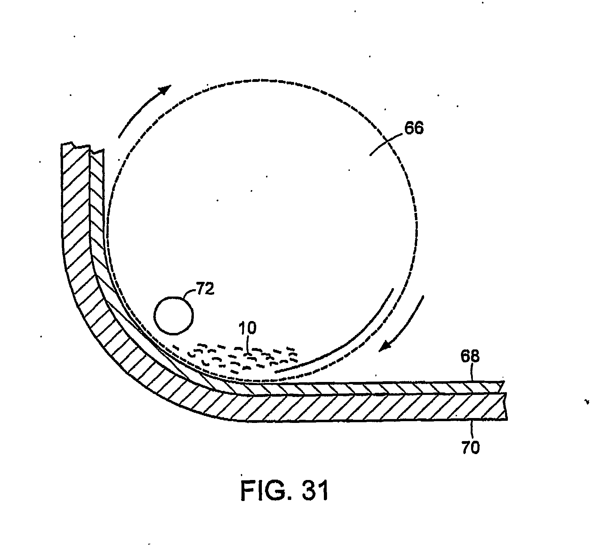

In one comparitive embodiment, with reference to FIG. 31, the perforated template can be in the form of a rotary screen 66 with the proper size holes and hole spacing. The screen 66 can be vibrated to assist the flow of the components 10 into the holes in the screen 66.

Only one component 10 can locate in each hole and bond to the clear coated clear film or clear adhesive 68 on the clear substrate or film 70. The substrate 70 and adhesive 68 wrap around the screen 66 such that extra components 10 fall back to the bottom, and located components 10 can be pushed or pressed into place, for example, with a roller 72. The outer surface of the screen 66 can be covered with, or formed from a material, such as a silicone release or other suitable material, such that the adhesive 68 does not stick to it. Rotary screens 66 can be obtained from Stork NV, Naarden, The Netherlands.

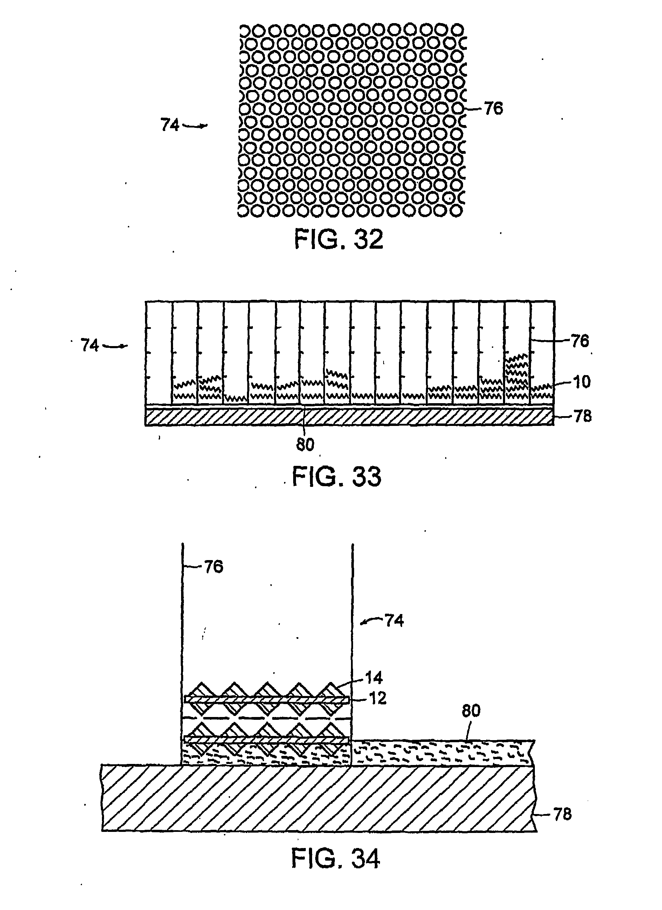

An optical structure has been made using a honeycomb structure manufactured by Plascore, Inc. of 615 N. Fairview Street, Zeeland, Michigan 49464, part number PCFR125-W. The particular honeycomb structure 74 used is one inch deep with an opening size of about 3.175 mm (0.125 inch). The structure has regularly spaced openings 76 as shown in FIG. 32.

A film 78, which can be polyethylene terephthalate (PET), is coated with about a 0.0508 mm (0.002 inch) thick coating of clear acrylic resin or adhesive 80. The honeycomb 74 is placed on the coated surface 80, displacing the coating 80 where the honeycomb structure 74 pushes down on the film 78. Hexagonal, two-sided components 10 are sprinkled on top of the honeycomb structure 70 (FIG. 33). The components 10 are slightly less than or equal to the 0.0508 mm (0.002 inch) openings when measured across a diagonal of the hexagon-shaped component 10.

In this comparitive embodiment, the components 10 have cube-comer prisms 14 having a 0.1524 mm (0.006 inch) pitch on both sides of a 0.0508 mm (0.006 inch) PET film 12 with the cube-comer face bonded to the film. The size of the component 10 relative to the opening 76 of the honeycomb structure 74 allows only one component 10 to settle in a flat position on the adhesive 80 (see enlarged view in FIG. 34). In one embodiment, the coating 80 is substantially transparent or clear with the same index of refraction as the cube-corner prisms 14 causing the bottom prisms of the component 10 to wet-out and thus effectively disappear. A small amount of air pressure can be applied to assure that the bottom prisms 14 of the components 10 thoroughly penetrate the adhesive 80. The coating 80 is then cured either through film 78 or through the honeycomb structure 74.

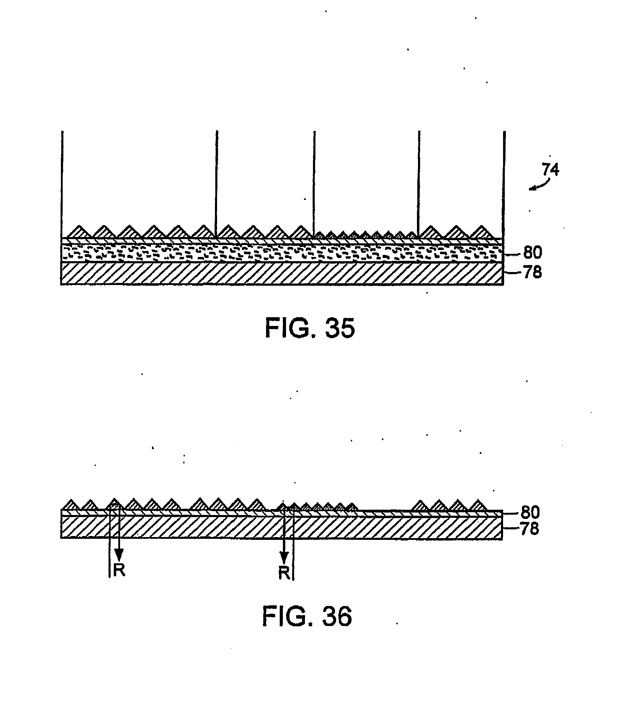

The extra components 10 can be removed, for example, with a vacuum, and recycled for later use, leaving the structure shown in FIG. 35. The finished optical structure (FIG. 36) can have components 10 having the same or different size cube-comer prisms. Some of the honeycomb holes 76 can be blocked as one size prism is located and then opened to allow filling the empty honeycomb holes with a different size prism on the components 10.

Although this example uses components having cube-comer prisms, components having moth-eye structures, linear prisms, lenslets, surface relief structures, micro-lens structures, fish-eye lens arrays, and other suitable optical structures can be implemented as as well.

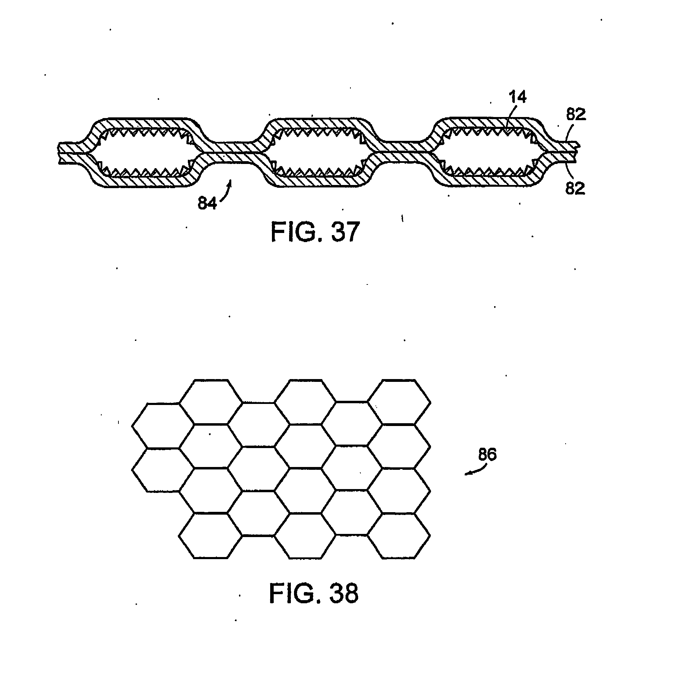

In particular comparitive embodiments, air-backed, two-sided components can be made by sealing two sheets together, each sheet having optical microstructures on one side, and breaking sealed-encapsulated cells into separate air-backed components. In a particular comparitive embodiment, as illustrated in FIG. 37, sheets 82, which can be thermoplastic and have optical microstructures on at least one side, in this case cube-comer prisms 14, are sealed at selected areas 84 or patterns 86 (FIG. 38). In other comparitive embodiments, a single sheet 82 can be folded over on itself to form the optical structure. The sealed areas 84 are designed to tear or break easily. The prisms 14 in the sealed areas 84 are forced into the thermoplastic sheet 82 to allow bonding of the two sheets 82 to encapsulate the prisms. The thermoplastic sheets 82 can be soft or rigid, depending on the desired properties of the encapsulated components.

The resulting comparitive components can be spread on an adhesive coated film, mixed into adhesives, polymers, paints, coatings, etc. In a particular embodiment; any of the components disclosed herein can be dispersed in polyurea, which is disclosed in U.S. Patent Application No. 10/634,122, filed August 4, 2003, and published as U.S. Patent Application Publication 2004/105154 on June 3, 2004.

Multiple size and tilt of the optical microstructures, for example, cube-comer prisms, can be used. If desired, at least some of the prisms can be metalized. Different size components can also be used, if desired. Additionally, open-faced components or anti-cube-comer components can be used to form the components disclosed herein.

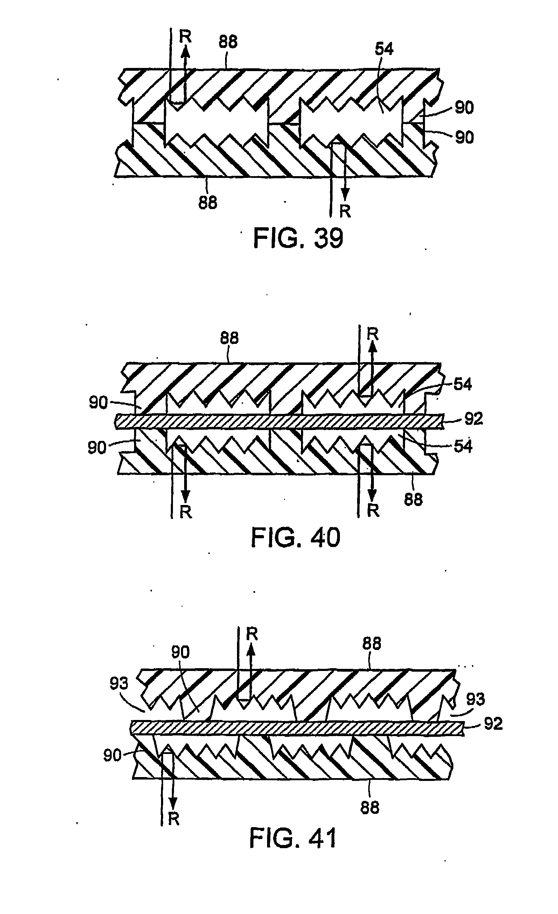

Another comparitive embodiment of a two-sided optical structure is shown in FIG. 39, in which two sheets 88 having optical microstructures on at least one side are registered back to back and held together at extending members 90, for example, with adhesive. As illustrated in FIG. 40, a middle layer 92, which can be colored or white, can be provided between the sheets 88. As illustrated in FIG. 41, extending members 90 do not have to be registered with respect to one another on layer 92. If the optical structure of FIG. 41 is mixed into a liquid, such as paint, there may be some loss of retroreflection at areas 93 because the liquid may wet-out the optical microstructure, such as cube-corner prisms.

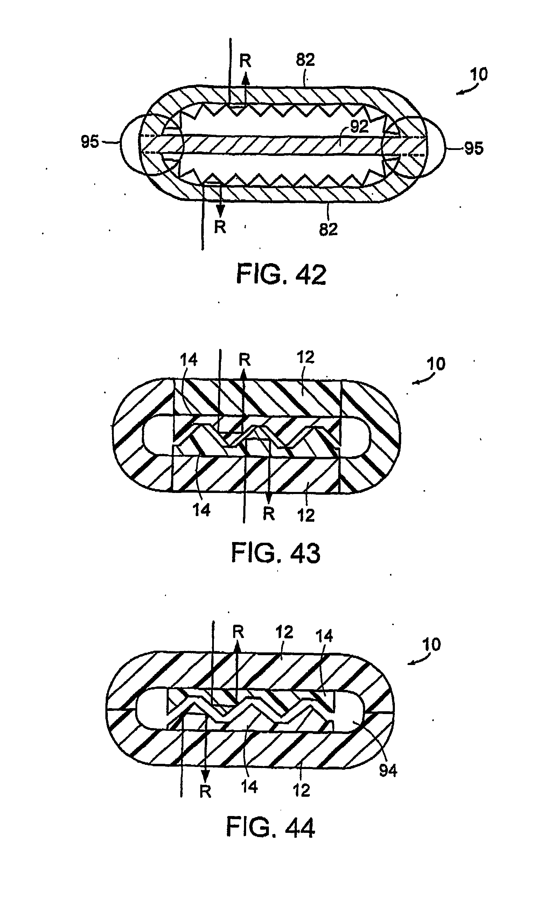

FIG. 42 illustrates one comparitive embodiment of a two-sided optical component 10 in which sheets 82 are positioned such that the optical microstructure faces sheet 92, which can be colored or white. At areas 95, the sheets are sealed together and sheared off to form components 10.

The resulting structures can be cut or formed into individual components that can, for example, be mixed into a viscous fluid or floated onto a substrate.

FIG. 43 illustrates yet another comparitive embodiment of a two-sided component 10. Two sheets or top film 12 having optical microstructures, such as cube-comer prisms 14, on at least one side, are made to allow flow sealing around the edges of the back-to-back cube-comers as the material is cut to form the sealed components. As shown in FIG. 44, the top film material is flowed around the back-to-back air-backed cube-comer sections as the films are cut into components forming encapsulated back-to-back air-backed cube-comer sections that retroreflected in two opposite planes. Area 94 can also be filled in with to film material.

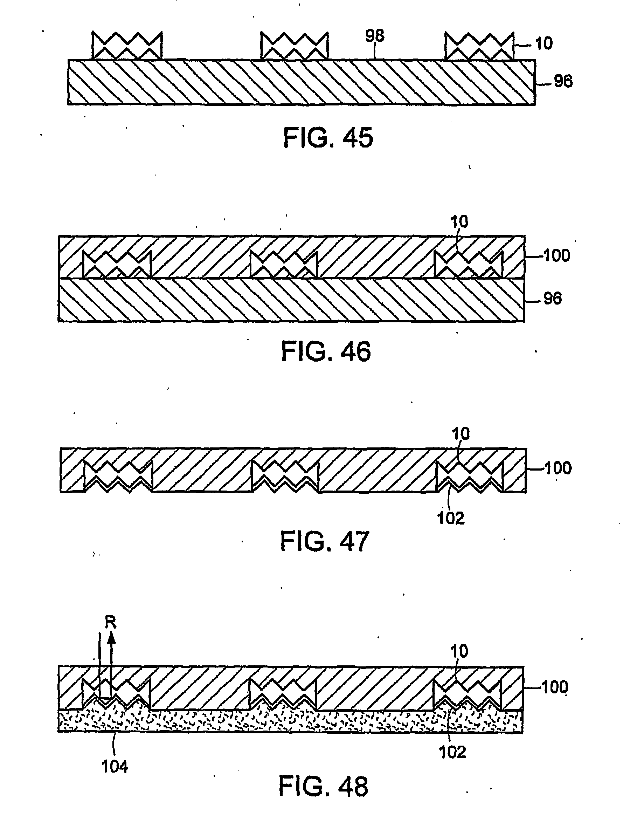

FIGS. 45-48 illustrate another embodiment outside the scope of the present invention. In this comparitive embodiment, as shown in FIG. 45, a plurality of two-sided retroreflective cube-comer components 10 are positioned on a substrate 96. A light tack adhesive 98 can be used to hold the components 10 in place. A fill layer 100 is then formed over the components 10 as shown in FIG. 46. In FIG. 47, the substrate 96 has been stripped away to expose one side of substantially all of the components 10. A reflective coating 102, for example, a metal layer of aluminum, is formed on the exposed facets of the components 10. In other comparitive embodiments, the reflective coating covers the entire bottom surface. In FIG. 48, a layer of adhesive 104 can be formed on the fill layer 100 adjacent the reflective coating 102 such that the structure can be attached to a substrate, for example, an article of clothing.

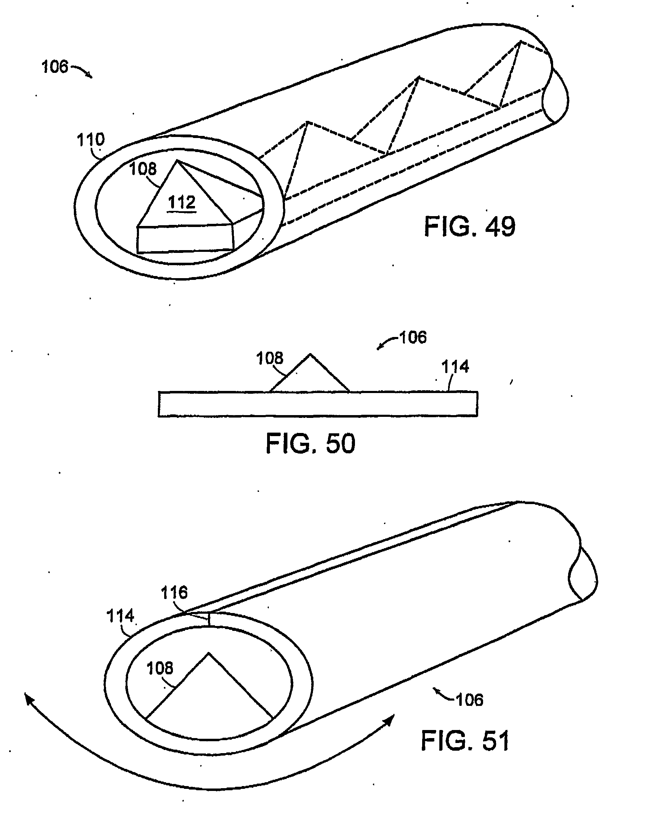

In other comparitive embodiments, an elongate optical structure that can be called a thread or fiber 106 is provided having microstructures 108, such as cube-comer prisms, surface relief diffuser structures, micro-lens structures, or other microstructures, as disclosed above, or combinations thereof. A tube or outer layer 110 surrounds or encases the prisms 108 to protect and, in specific embodiments, insure that facets 112 are air-backed. The outer layer 110 can be formed from a material that is sufficiently flexible to be stitchable into a garment while having sufficient tensile strength such that it does not break during the stitching process. In particular embodiments, the outer layer 110 can be formed from polyester, nylon, polyvinyl chloride (PVC), or other suitable materials or combinations thereof. In a particular method of manufacture outside the scope of the present invention illustrated in FIG. 49, microstructures 108 are slit cast or molded into thin threads and the outer layer 110 is extruded around the microstructures, e.g., the microstructures are fed inside the outer layer as it is extruded. The thread 106 can be cut or formed into discrete lengths to form chips or flakes that can be woven in a fabric mesh, mixed in with a coating, applied to a film, or used in other suitable applications. The ends of the chips with flakes can be sealed.

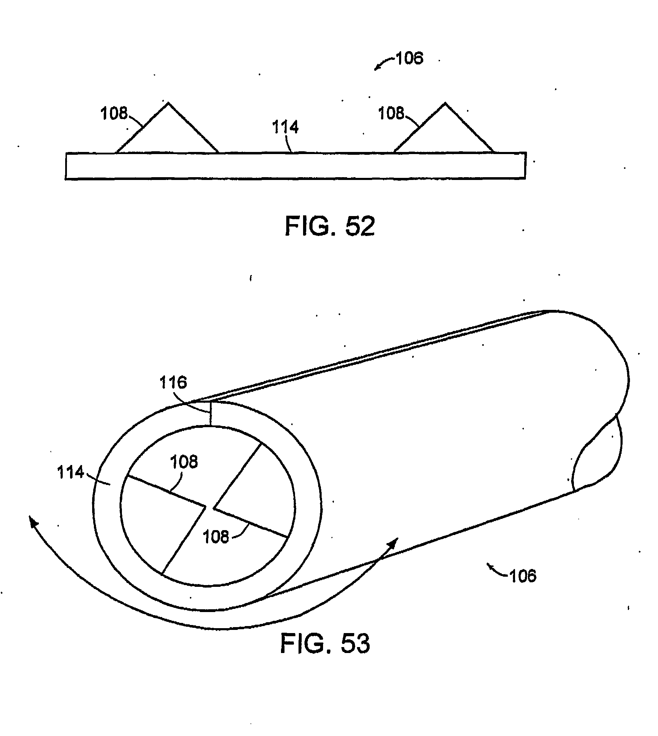

FIGS. 50 and 51 illustrate another comparitive embodiment of a thread 106 in which the microstructures 108 are provided on a substrate 114, such as by a slit casting method. The substrate 114 is then wrapped around the microstructures 108 to become the outer layer of the thread 106 and sealed at area 116. The cross-sectional shape of the thread 106 can be any geometric shape. In a particular comparitive embodiment, the thread 106 is substantially circular in cross-section, having an outside diameter in the range of between about 50 and 510 micrometers (.002 and .020 inches). FIGS. 52 and 53 illustrate a comparitive embodiment of a retroreflective thread 106 configured to retroreflect light in at least two directions. Thus, a single substrate 114 forms the outer layed.

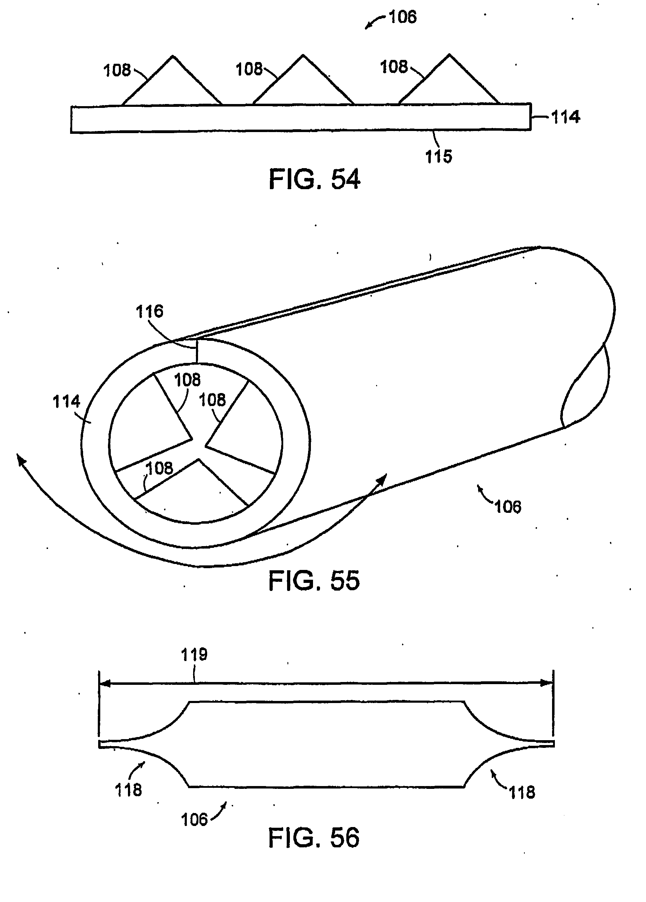

FIGS. 54 and 55 illustrate a comparitive embodiment of a thread 106 configured to retroreflect light in at least three directions. In other comparitive embodiments, the thread 106 is configured to retroreflect light in four or more directions. FIG. 56 is a side view of a thread 106 that has each end 118 pinched to seal or hermetically close the interior of the thread. In other embodiments, the thread 106 can be made with a progressive injection compression molding process that can use thermoplastic or thermoset materials. In further comparitive embodiments, non-optical mechanical-structured fibers can be formed this way.

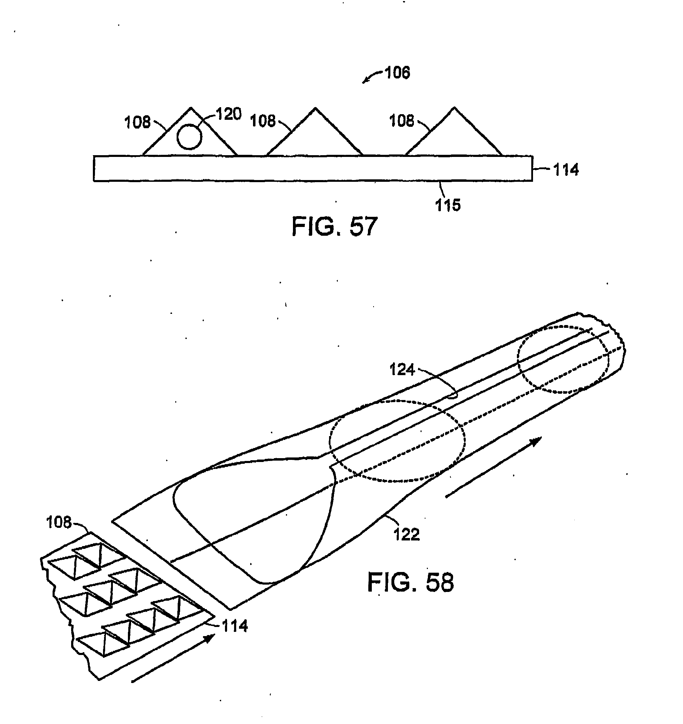

FIG. 57 illustrates a comparitive embodiment of an unformed retroreflective thread 106 in which air spheres 120 are provided in at least some of the microstructures 108, as disclosed in U.S. Patent 5,592,330, which issued to Bernard on January 7, 1997.

The outside surface 115 of the substrate 114 can include a moth-eye structured surface and/or a textured surface to reduce or eliminate gloss and glare on the finished thread 106.

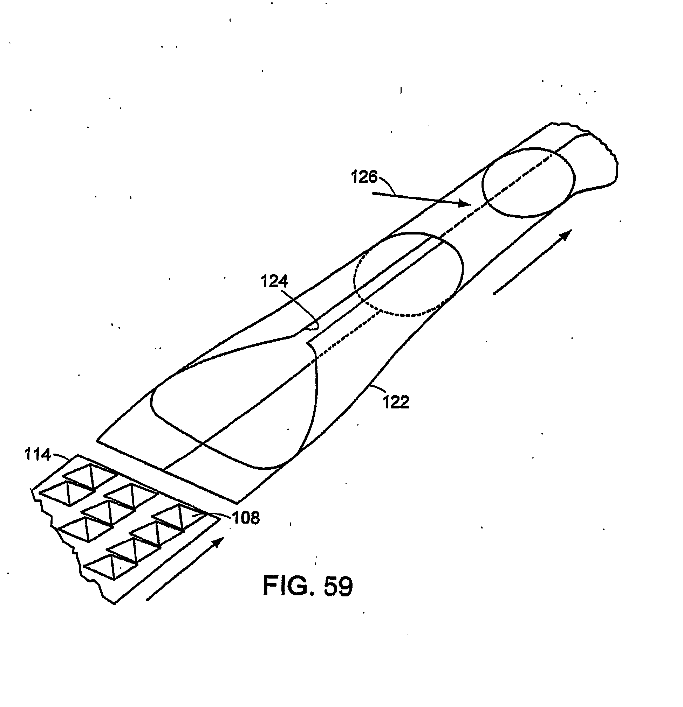

FIG. 58 illustrates one comparitive embodiment of a manufacturing tool 122 used to enclose or wrap the substrate 114 around the microstructures 108. Heat can be applied in channel 124 to seal the thread at area 116. FIG. 59 illustrates another comparitive embodiment of a manufacturing tool 122 used to form threads 106. Heat or a bonding agent, such as a solvent or adhesive, applied at seam 126 attaches the substrate walls together to enclose the microstructures 108 therein.

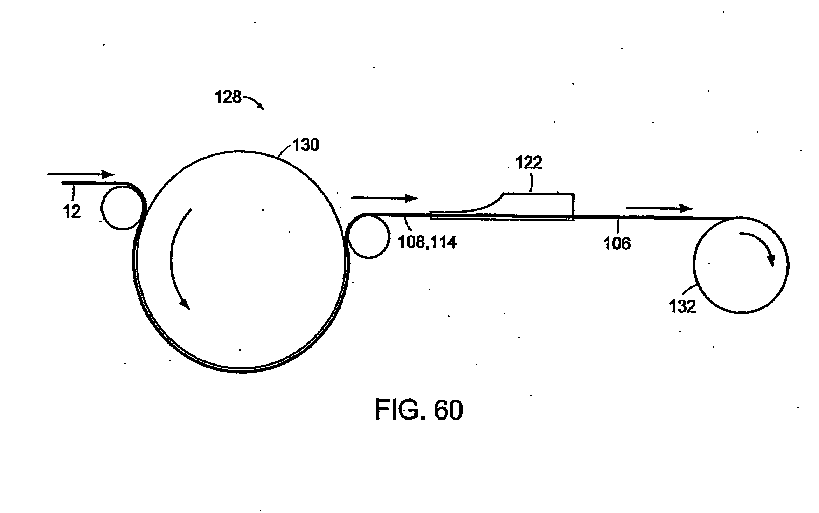

FIG. 60 illustrates one comparitive embodiment of a manufacturing system 128 used to form retroreflective threads 106. A substrate 12 is fed against a drum 130 that casts microstructures 108 thereon. The substrate 114 and microstructures 108 are fed into a tool 122 that forms hollow threads 106 that are wound up on spool 132.

In further comparitive embodiments, a similar manufacturing process can be used to form retroreflective optical structures of various shapes and sizes. In one comparitive embodiment, cube-comer prisms having a pitch in the range of between about 150 to 460 micrometers (0.006 to .018 inches) and a height in the range of between about 76 to 230 micrometers (0.003 to 0.009 inches) are provided on a substrate 114 that is then formed by tool 122 into a hollow structure. For example, cross-sectional shapes of the hollow structure can include circular, rectangular, oblong, or other desired shapes. The hollow structures can be of various sizes depending on the application. For example, a rectangular-shaped hollow structure can be used to form retroreflective signs that can be used at roadside construction sites. In specific comparitive embodiments, the substrate 114 has a thickness in the range of between about 255 to 1,016 micrometers (0.010 to 0.040 inches) and the structure is substantially circular-shaped in cross-section having an outside diameter of up to about 15 centimeters (6.0 inches). In another comparitive embodiment, an optical structure that is substantially rectangular-shaped in cross-section has a thickness of up to about 2.5 cm (1 inch) and a width of up to about 31 cm (1 foot). In these comparitive embodiments, a single structure 114 can be used to form the outer layer.

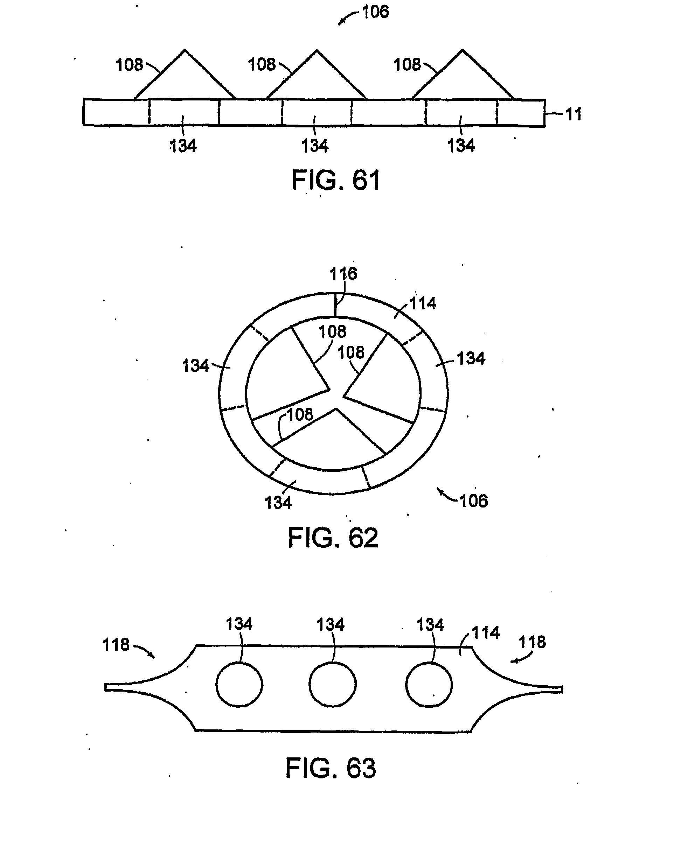

FIGS. 61-63 illustrate another comparitive embodiment of a retroreflective thread 106 in which the substrate 114 is perforated or formed with apertures 134 before the microstructures 108 are formed thereon. As the microstructures 108 are cast onto the substrate 114, resin fills the perforations or apertures 134 such that the material that forms the microstructures extends through the substrate. One advantage of this configuration is that material that forms substrate 114 does not necessarily have to be as transparent as the material that forms the microstructures 108. Thus, high temperature thermoplastic substrate materials that are not as transparent as the microstructure material can be used to form the substrate 114. In other comparitive embodiments, the substrate 114 and/or microstructures 108 can be formed from colored and/or fluorescent material(s). For example, the thread 106 can be configured to have a daytime color and retroreflect a different color.

In embodiments of the present invention, the threads, fibers, or other optical structures disclosed herein can be formed by an injection process according to claim 1, for example, an injection-compression process. In specific embodiments, thermoplastics or thermoset plastic materials can be used.

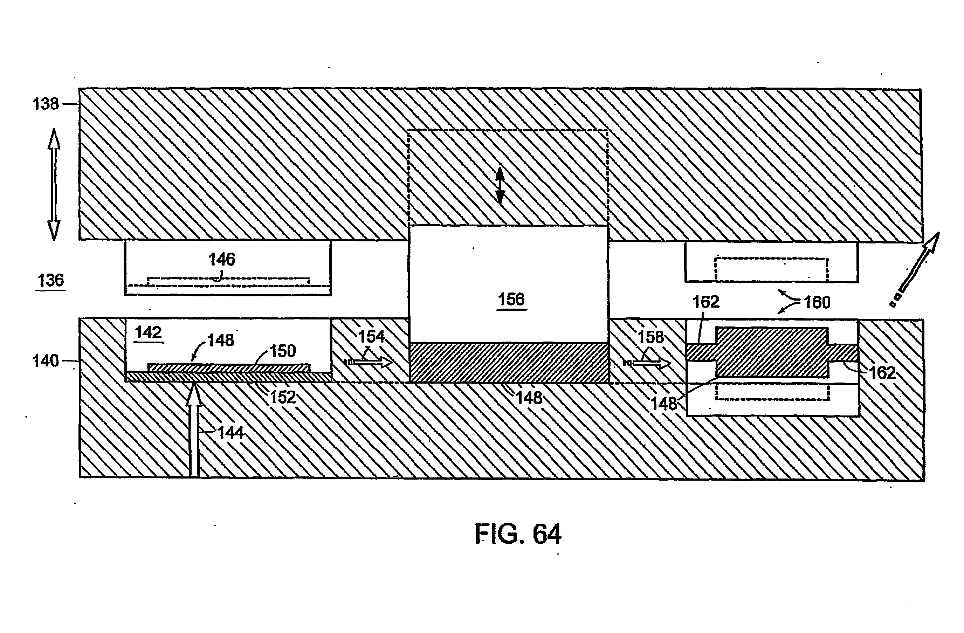

FIG. 64 illustrates an embodiment according to claim 9, of a mold 136 that can be used to form optical structures in accordance with aspects of the present invention. In this particular embodiment, the mold 136 includes two halves 138, 140. In this embodiment, mold half 138 is moveable relative to mold half 140, *i.e.,* half 140 is stationary. In other embodiments, mold half 140 can be moveable relative to stationary mold half 138 or each half can be moveable, *i.e.,* neither half is stationary. Plastic material 144, which can include a thermoplastic material in one embodiment, is introduced into cavity 142 that is formed in mold half 140.

Mold half 138 includes a recess 146 that forms the optical structure. In this embodiment, the recess 146 is configured to form an optical structure 148 having linear prisms 150 integrally formed on a substrate 152 (see, for example, the structure illustrated in FIG. 54). The mold half 138 is then moved upwards and the optical structure 148 is moved in the direction of arrow 154 into a tool 156 that forms/shapes the structure 148 into a geometric structure, such as a square, circle, etc.

The optical structure 148 is then moved in the direction of arrow 158 into a sealing tool 160 that pinches and seals ends 162 of the optical structure 148, for example, with heat and/or pressure. The structure 148 is then ejected from the mold 136. Thus, a method is provided for mass producing discrete optical structures that can include fibers or threads. The cost of the tooling is relatively low.

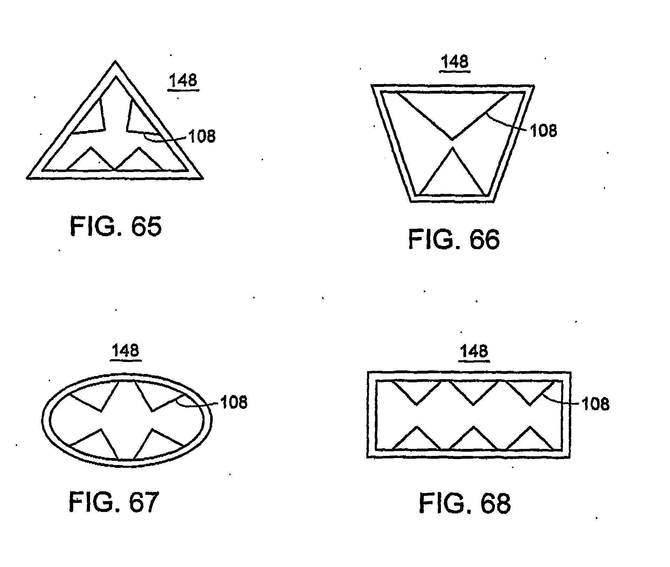

FIGS. 65, 66, 67, and 68 illustrate various exemplary cross-sectional shapes of optical structures 148 that can be formed, for example, by the mold 136 according to claim 9 illustrated in FIG. 64. These shapes can include triangle, oval, rectangle, trapezoid and square. Other cross-sectional shapes can be provided in accordance with further embodiments of the invention. In further embodiments, the optical structures can be formed by an extrusion process according to claim 1.

In further embodiments according to claims 1 and 9, the thread 106 or optical structure can have light-scattering or redirection properties that improve the uniformity of the light distribution. For example, the substrate 114 can include a textured surface. In other embodiments, the microstructures 108 can include multi-orientation cube-comer sheeting as disclosed in U.S. Patent 6,036,322, which issued to Nilsen et al. on March 14, 2000. In further embodiments, the microstructures 108 can include cube-comer prisms having one or more windows in at least some of the facets as disclosed in U.S. Patent 5,565,151, which issued to Nilsen on October 15,1996. In other embodiments, the microstructures 108 can include glittering cube-comer retroreflective sheeting as disclosed in U.S. Patent 5,840,405, which issued to Shusta et al. on November 24. 1998. In any of the embodiments according to claims 1 and 9, the produced microstructures 108 can include cube-comer prisms that have a reflective layer, such as a metal layer, formed on the facets. The produced microstructures 108 can include diced retroreflective sheeting as disclosed in U.S. Patent 4,202,600, which issued to Burke et al. on May 13, 1980.

In further embodiments according to claims 1 and 9, any of the components, optical structures, chips, flakes, threads, fibers, etc. can be selected. With one or more polymers, the selected component can be mixed into or provided within or coated on or combinations thereof.

The threads 106 of the present application according to claims 1 and 9 can be used to create a breathable fabric, which can be tightly or loosely woven and/or retroreflective to form garments, such as jackets, sweaters, trousers, vests, and fire coats. In specific embodiments, virtually any retroreflective light distribution can be created. A woven fabric mesh can be used for garments, such as vests, jackets, or pants, or can be put in or on a film such as a polymer film. In other embodiments, the polymer film can be thin, elastomeric, flexible, or combinations thereof, for flexible applications such as garment tape, roll-up signs (RUS), tarpaulins, cone collars, etc., and thick, hard, and/or rigid applications for applications, such as barricades, pipes, signs, etc. The fibers or threads 106 can be disposed in a slurry, moved onto a paper making belt, pressed and fused together, and dried to form a synthetic retroreflective paper of fabric. High temperature fibers or threads 106 can be woven or disposed within firemen's and other emergency service garments to provide nighttime safety. In other embodiments, the threads 106 can be woven or formed into yarn, rope, or other structures, such as retroreflective mesh fences.

The hollow nature of the fibers and threads provides added flotation to devices, such as jackets, life rings, etc. Also, the hollow nature of the fibers and threads provides insulation to many types of garments and structures.

The fibers and threads of embodiments of the present invention and products formed from the same are difficult to counterfeit. Counterfeiters currently take optical structures and form tooling directly from the face of the structure. Because optical structures of the present application have microstructures on the inside of the structure, counterfeit molds cannot be easily produced.

Additionally, since the optical structures, including fibers and threads, can be woven into garments, the entire garment can be retroreflective, for example, to improve visibility of a fireman or jogger. Similarly, chips and flakes can be mixed in with coatings, such as paint, to cover substantially all of the product, for example, a cone or boat, to improve visibility so as to be recognizable as a specific object. In other embodiments, the threads 106 can be enclosed inside elastomeric substrate materials, such as roll-up signs (RUS), channelizers, and cone collars.

Thus, seamless, single layer, wide-width, light-redirecting optical structures, such as films, threads, and fibers are provided in accordance with embodiments of the present invention. Air-backed optical structures of the present application do not have a "gray" appearance that metalized embodiments can provide. Air-backed optical structures can provide a more pleasing daytime appearance.

In any of the embodiments according to claims 1 and 9, any of the materials used to form components 10 or the substrate can include fluorescent dyes or pigments. In particular embodiments, high temperature thermoplastics can be used to form any of the structures disclosed herein, such as substrate 12 or elements 14. For example, the high temperature thermoplastic can include polybenzimidazole (PBI), polyaryletherketones (PAEK), such as polyetherketone (PEK), polyetherketoneketone (PEKK), and polyetheretherketone (PEEK), polyphenylene sulfide (PPS), polyimides, such as polyetherimide (PEI) and polyamideimide (PAI), polyesters, such as polybutylene terephthalate (PBT), polyethylene terephthalate (PET), and polycyclohexamethylterephthalate (PCT), liquid crystal polymers, which can be polymerized from hydroxybenzoic acid, hydroxynaphthoic acid or dihydroxybiphenyl, sulfone polymers, such as polysulfone (PSU), polyethersulfone (PES), and polyphenylsulfone (PPSU), polyamides, which are commonly called nylons.

Wide area optical structures can thus be produced by the methods disclosed herein. For example, large area seamless structures or sheeting can be implemented in the retroreflective, security, lighting, day lighting, front projection, rear projection, back lighting, and anti-glare applications. The microstructures in any of the embodiments can include cube-comer prisms, diffractive structures and lenses, lens arrays, prism arrays, linear Fresnel lenses, lenslets, alphanumeric characters, digital structures (*e.g*., raised structures that are designed to carry information that is binary, for example, a bar code), colored structures, color stiffening structures, textured structures, moth-eye structures, linear prisms and lenses, lenslets, fish-eye lens arrays, or other suitable microstructures.

Additionally, the materials including polyurea, as disclosed in U.S. Patent Application No. 10/634,122, filed on August 4, 2003, (U.S. Patent Application Publication 2004/105154, can be used to form any of the structures disclosed herein, including the substrate 12 and elements 14.

While this invention has been particularly shown and described with references to various embodiments thereof, it will be understood by those skilled in the art that various changes in form and details may be made therein without departing from the scope of the invention encompassed by the appended claims.

## Claims

1. A method for forming an optical structure, comprising:
injecting a material into a first mold half (140); optical microstructures (108, 150) integrally formed on the substrate (152);
forming with a tool (156) the substrate (152) into a hollow structure (148) with a desired cross-sectional geometric shape, the surface of the substrate (152) with optical microstructures (108, 150) being an interior surface of the hollow structure (148), and
sealing the remaining two ends (162) of the hollow structure (148).

2. The method of Claim 1, further comprising texturing, coloring, and/or providing a moth-eye structured surface on the optical structure (108).

3. The method of Claim 1, wherein the substrate (152) and optical microstructures (108, 150) are formed by a progressive injection molding process.

4. The method of Claim 1, wherein the desired geometric shape includes a cross-sectional geometric shape of a triangle.

5. The method of Claim 1, wherein the desired geometric shape includes a cross-sectional geometric shape of an oval.

6. The method of Claim 1, wherein the desired geometric shape includes a cross-sectional geometric shape of a rectangle.

7. The method of Claim 1, wherein the desired geometric shape includes a cross-sectional geometric shape of a trapezoid. moving a second mold half (138) which includes a recess (146), relative to the first mold half (140), in order to form a substrate with the second mold half (138) includes a recess (146) and is suitable for forming a

8. The method of Claim 1, wherein the desired geometric shape includes a cross-sectional geometric shape of a square.

9. A mold (136) for forming an optical structure, comprising:
a first mold half (140) and a second mold half (138), the first mold half defining a cavity (142) for receiving material (144), substrate (152) with optical mircrostructures (108, 150) integrally formed on the substrate (152);
a shaping tool (156) configured to form the substrate (152) into a hollow structure (148) with a desired cross-sectional geometric shape, the surface of the substrate (152) on which optical microstructures (150) are disposed being an interior surface of the hollow structure (148); and
a sealing tool (160) for sealing remaining ends of the geometrically shaped hollow structure (148)

10. The mold of Claim 9, wherein the shaping tool (156) includes a geometrically shaped die.

11. The mold of Claim 10, wherein the shape of the shaped die is selected from a group consisting of a square, a circle, an oval, a rectangle and a triangle.

12. The mold of Claim 9, wherein the sealing tool (160) includes a pressure seal.

13. The mold of Claim 9, wherein the sealing tool (160) includes a temperature seal.

## Patentansprüche

1. Verfahren zum Formen einer optischen Struktur, mit:
Einspritzen eines Materials in eine erste Formhälfte (140);
Bewegen einer zweiten Formhälfte (138), die eine Ausnehmung (146) aufweist, relativ zur ersten Formhälfte (140), um ein Substrat mit optischen Mikrostrukturen (108, 150) zu bilden, die auf dem Substrat (152) einstückig ausgebildet sind;
Formen des Substrats (152) mit einem Werkzeug (156) in eine hohle Struktur (148) mit einer gewünschten geometrischen Querschnittsform, wobei die Fläche des Substrats (152) mit den optischen Mikrostrukturen (108, 150) eine Innenfläche der hohlen Struktur (148) ist; und
Abdichten der beiden übrigen Enden (162) der hohlen Struktur (148).

2. Verfahren nach Anspruch 1, weiters umfassend ein Texturieren, Färben und/oder Vorsehen einer Mottenaugenstruktur-Oberfläche auf der optischen Struktur (108).

3. Verfahren nach Anspruch 1, wobei das Substrat (152) und die optischen Mikrostrukturen (108, 150) durch einen progressiven Spritzgußvorgang gebildet werden.

4. Verfahren nach Anspruch 1, wobei die gewünschte geometrische Form eine geometrische Querschnittsform eines Dreiecks aufweist.

5. Verfahren nach Anspruch 1, wobei die gewünschte geometrische Form eine geometrische Querschnittsform eines Ovals aufweist.

6. Verfahren nach Anspruch 1, wobei die gewünschte geometrische Form eine geometrische Querschnittsform eines Rechtecks aufweist.

7. Verfahren nach Anspruch 1, wobei die gewünschte geometrische Form eine geometrische Querschnittsform eines Trapezes aufweist.

8. Verfahren nach Anspruch 1, wobei die gewünschte geometrische Form eine geometrische Querschnittsform eines Quadrates aufweist.

9. Form (136) zum Formen einer optischen Struktur, mit:
einer ersten Formhälfte (140) und einer zweiten Formhälfte (138), wobei die erste Formhälfte einen Hohlraum (142) zur Aufnahme von Material (144) definiert, und wobei die zweite Formhälfte (138) eine Ausnehmung (146) hat und zum Bilden eines Substrats (152) mit optischen Mikrostrukturen (108, 150) geeignet ist, die auf dem Substrat (152) einstückig ausgebildet sind;
einem formgebenden Werkzeug (156), das konfiguriert ist, um das Substrat (152) in eine hohle Struktur (148) mit einer gewünschten geometrischen Querschnittsform zu formen, wobei die Fläche des Substrats (152), auf der sich die optischen Mikrostrukturen (150) befinden, eine Innenfläche der hohlen Struktur (148) ist; und
einem Dichtungswerkzeug (160) zum Abdichten der übrigen Enden der geometrisch geformten hohlen Struktur (148).

10. Form nach Anspruch 9, wobei das formgebende Werkzeug (156) einen geometrisch geformten Einsatz enthält.

11. Form nach Anspruch 10, wobei die Form des geformten Einsatzes aus einer Gruppe bestehend aus Quadrat, Kreis, Oval, Rechteck und Dreieck ausgewählt ist.

12. Form nach Anspruch 9, wobei das Dichtungswerkzeug (160) eine Druckdichtung enthält.

13. Form nach Anspruch 9, wobei das Dichtungswerkzeug (160) eine Temperaturdichtung enthält.

## Revendications

1. Procédé pour former une structure optique, comprenant les étapes consistant à :
injecter un matériau dans un premier demi-moule (140) ;
déplacer un second demi-moule (138) qui comprend un évidement (146), par rapport au premier demi-moule (140), afin de former un substrat avec des microstructures optiques (108, 150) formées d'un seul tenant sur le substrat (152) ;
former le substrat (152) avec un outil (156) pour obtenir une structure creuse (148) avec une forme géométrique de section transversale souhaitée, la surface du substrat (152) avec des microstructures optiques (108, 150) étant une surface intérieure de la structure creuse (148) ; et
fermer de façon étanche les deux extrémités restantes (162) de la structure creuse (148).

2. Procédé selon la revendication 1, comprenant en outre les étapes consistant à texturer, colorer, et/ou fournir une surface de type moth-eye (oeil de papillon) sur la structure optique (108).

3. Procédé selon la revendication 1, dans lequel le substrat (152) et les microstructures optiques (108, 150) sont formés par un procédé de moulage par injection progressif.

4. Procédé selon la revendication 1, dans lequel la forme géométrique souhaitée comprend une forme géométrique de section transversale d'un triangle.

5. Procédé selon la revendication 1, dans lequel la forme géométrique souhaitée comprend une forme géométrique de section transversale d'un ovale.

6. Procédé selon la revendication 1, dans lequel la forme géométrique souhaitée comprend une forme géométrique de section transversale d'un rectangle.

7. Procédé selon la revendication 1, dans lequel la forme géométrique souhaitée comprend une forme géométrique de section transversale d'un trapézoïde.

8. Procédé selon la revendication 1, dans lequel la forme géométrique souhaitée comprend une forme géométrique de section transversale d'un carré.

9. Moule (136) destiné à former une structure optique, comprenant :
un premier demi-moule (140) et un second demi-moule (138), le premier demi-moule définissant une cavité (142) pour recevoir un matériau (144), le second demi-moule (138) comprend un évidement (146) et est approprié pour former un substrat (152) avec des microstructures optiques (108, 150) formées d'un seul tenant sur le substrat (152) ;
un outil de formage (156) configuré pour former le substrat (152) pour obtenir une structure creuse (148) avec une forme géométrique de section transversale souhaitée, la surface du substrat (152) sur laquelle des microstructures optiques (150) sont disposées étant une surface intérieure de la structure creuse (148) ; et
un outil de fermeture étanche (160) pour fermer de façon étanche les extrémités restantes de la structure creuse formée géométriquement (148).

10. Moule selon la revendication 9, dans lequel l'outil de formage (156) comprend une matrice formée géométriquement.

11. Moule selon la revendication 10, dans lequel la forme de la matrice formée est sélectionnée parmi un groupe constitué d'un carré, un cercle, un ovale, un rectangle, et un triangle.

12. Moule selon la revendication 9, dans lequel l'outil de fermeture étanche (160) comprend un dispositif d'étanchéité à pression.

13. Moule selon la revendication 9, dans lequel l'outil de fermeture étanche (160) comprend un dispositif d'étanchéité à température.
